# EUROPÄISCHE PATENTSCHRIFT

(11) **EP 1 369 335 B1**
(45) Veröffentlichungstag und Bekanntmachung des Hinweises auf die Patenterteilung: **10.05.2006**
(21) Anmeldenummer: 03011135.5
(22) Anmeldetag: 23.05.2003
(51) Int. Cl.: B62D 1/04, B60R 21/20, F16B 41/00

(54) **Baugruppe, insbesondere Fahrzeuglenkradverkleidungsbaugruppe**
Assembly, especially steering wheel cover assembly of a vehicle
Ensemble, en particulier ensemble de revêtement de volant de direction d'un véhicule

(30) Priorität: 31.05.2002 DE 20208461 U
(43) Veröffentlichungstag der Anmeldung: 10.12.2003
(73) Patentinhaber: TRW Automotive Safety Systems GmbH, 63743 Aschaffenburg (DE)
(72) Erfinder: Heindl, Ralf, 63743 Aschaffenburg (DE)
(74) Vertreter: Kitzhofer, Thomas

(56) Entgegenhaltungen:
- US-A- 5 431 438

## Beschreibung

Die Erfindung betrifft eine Baugruppe, insbesondere eine Fahrzeuglenkradverkleidungsbaugruppe, aus einem Bauteil mit einem Durchgangsloch für ein Werkzeug und einer Sichtblende zur Abdeckung des Durchgangslochs.

Eine solche Baugruppe wird in US 5 431 438 offenbart.

Bei der Montage eines Lenkrads ist es erwünscht, daß ein Gassackmodul zu einem so späten Fertigungsschritt wie möglich eingesetzt wird. Dies führt dazu, daß in der äußeren Verkleidung des Lenkrads Durchgangslöcher vorgesehen sein müssen, durch die die Schrauben, z.B. zur Befestigung des Gassackmoduls im Inneren des Lenkrads für ein Werkzeug zugänglich sind. Solche Durchgangslöcher unterbrechen aber das gleichförmige Aussehen der Verkleidung und stellen somit eine optische Störung dar. Es ist bekannt, größere Zugangsöffnungen mit Sichtschutzkappen abzudecken, die ihrerseits aber wieder Durchgangslöcher haben, durch die beim Kunden die Schrauben des Gassackmoduls zugänglich sind. Die Durchgangslöcher bleiben entweder offen und stören das Erscheinungsbild, oder sie müssen beim Kunden einzeln mit Kappen abgedeckt werden, wobei der zusätzliche Montageaufwand nachteilig ist.

Die Erfindung schafft eine Möglichkeit, ein Bauteil mit einer Sichtblende zu versehen, bei der für den Kunden keine zusätzliche Montagearbeit anfällt.

Dies wird bei einer gattungsgemäßen Baugruppe dadurch erreicht, daß die Sichtblende einen Befestigungsabschnitt und einen wenigstens teilweise elastischen Abdeckabschnitt aufweist, wobei der Befestigungsabschnitt vom Durchgangsloch beabstandet am Bauteil befestigt ist und der Abdeckabschnitt das Durchgangsloch verdeckt. Der Abdeckabschnitt ist gegenüber dem Befestigungsabschnitt so beweglich, insbesondere elastisch biegsam, daß er in einer Position das Durchgangsloch verdeckt und in einer anderen das Durchgangsloch freigibt. Die Sichtblende ist so ausgeführt, daß sie bestrebt ist, sich selbsttätig in die Position, in der das Durchgangsloch verdeckt ist, zu bewegen. Die Erfindung erlaubt es, die Sichtblende bereits an der Verkleidung des Lenkrads oder an der Sichtschutzkappe über einer Zugangsöffnung montiert zum Kunden zu liefern. Zur Montage des Gassackmoduls kann der Abdeckabschnitt der Sichtblende dann durch ein geeignetes Werkzeug, z.B. einen Schraubendreher, zur Seite bewegt und die Schrauben des Gassackmoduls angezogen werden. Sobald das Werkzeug wieder aus dem Durchgangsloch herausgezogen wird, sorgt der elastische Abschnitt dafür, daß sich der Abdeckabschnitt wieder über das Durchgangsloch legt und dieses vollständig verdeckt.

Im Regelfall ist die Sichtblende ein gegenüber der Verkleidung bzw. der Sichtschutzkappe separates Bauteil und besteht bevorzugt auch aus einem anderen Material als diese Bauteile.

Selbstverständlich ist die Anwendung der Erfindung nicht auf Lenkräder beschränkt, sondern läßt sich für jeden Gegenstand einsetzen, bei dem ein darunterliegendes Bauteil durch eine Öffnung in einer Verkleidung zugänglich sein soll.

Die Sichtblende hat vorzugsweise eine langgestreckte Form, wobei der Befestigungsabschnitt in der Verlängerung des Abdeckabschnitts angeordnet ist. Entweder ist nur ein Teil des Abdeckabschnitts angrenzend zum Befestigungsabschnitt elastisch ausgebildet, oder die Sichtblende besteht vollständig aus einem elastischen Material, z.B. einem Gummi oder einem Elastomer. In beiden Fällen sorgt die Form der Sichtblende auf einfache Art dafür, daß der Abdeckabschnitt nach einer Bewegung in seine Ausgangsposition zurückklappt, in der er das Durchgangsloch verdeckt.

Die Sichtblende ist am günstigsten auf der Innenseite des Bauteils angeordnet.

Bevorzugt hat der Abdeckabschnitt der Sichtblende einen Vorsprung, der formschlüssig in das Durchgangsloch eingreifen kann. Auf diese Weise entsteht auf der Außenseite der Verkleidung im Bereich des Durchgangslochs eine durchgehende Fläche.

Wenn die Ränder des Vorsprungs und des Durchgangslochs eine konische Form aufweisen, erleichtert dies die Führung des Vorsprungs in das Durchgangsloch beim Zurückklappen des Abdeckabschnitts.

Es ist möglich, den Befestigungsabschnitt über eine Rastverbindung mit dem Bauteil zu verbinden, z.B. können im Befestigungsabschnitt Öffnungen vorgesehen sein, während am Bauteil eine oder mehrere Rastnoppen ausgebildet sind, über die der Befestigungsabschnitt gezogen wird. Der Befestigungsabschnitt kann aber auch auf andere geeignete Art mit dem Bauteil verbunden sein, z.B. durch Kleben.

Weitere Merkmale und Vorteile der Erfindung gehen aus der nachfolgenden Beschreibung eines Ausfiihrungsbeispiels hervor, mit Bezug auf die beigefügten Zeichnungen. In diesen zeigen:
- Figur 1 einen schematischen Schnitt durch eine erfindungsgemäße Baugruppe, in diesem Fall ein Lenkrad im Bereich der Rückseite;
- Figur 2 einen vergrößerten Ausschnitt aus Figur 1 mit verschlossenem Durchgangsloch; und
- Figur 3 den Ausschnitt aus Figur 2 mit einer durch ein Werkzeug geöffneten Sichtblende.

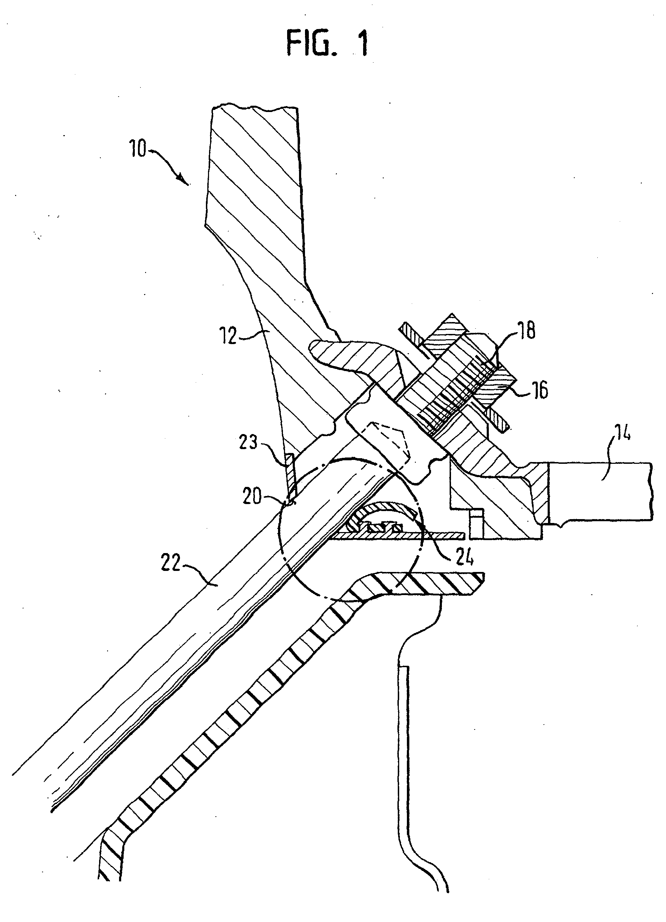

In Figur 1 ist ein Lenkrad 10 dargestellt, mit einer Verkleidungsbaugruppe mit einer äußeren, rückseitigen Verkleidung 12, einem Skelett 14 und einem Gassackmodul 16, das nur im Bereich seiner Befestigung gezeigt ist und das über eine Schraube 18 mit dem Skelett 14 verbunden werden soll.

Zu diesem Zweck ist in der Verkleidung 12 ein Durchgangsloch 20 vorgesehen, durch das hindurch die Schraube 18 mit einem Werkzeug 22 zugänglich ist. Die Verkleidung 12 weist in diesem Beispiel eine größere Zugangsöffnung auf, die mit einer zur Verkleidung 12 gehörenden Sichtschutzkappe 23 verschlossen ist, wobei das Durchgangsloch in der Sichtschutzkappe 23 angeordnet ist.

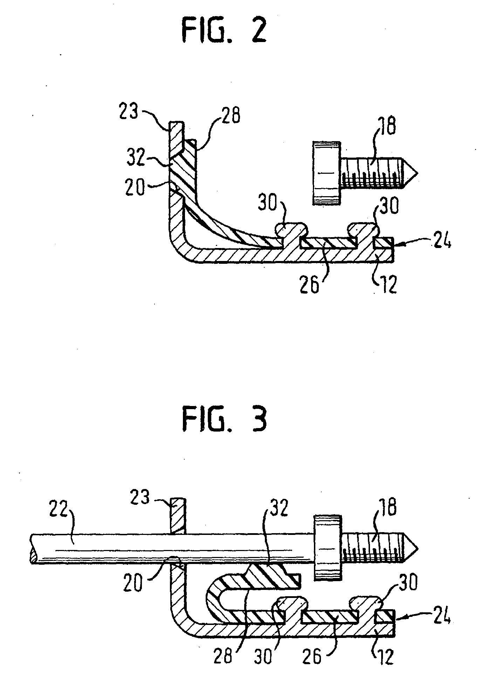

In den Figuren 2 und 3 ist der mit einem Kreis umrandete Bereich in Figur 1 vergrößert dargestellt.

Um das Durchgangsloch 20 zu verdecken, nachdem die Schraube 18 angezogen wurde, ist eine Sichtblende 24 an der Innenseite der Verkleidung 12 bzw. der Sichtschutzkappe 23 angebracht.

Die Sichtblende 24 weist einen Befestigungsabschnitt 26 und einen Abdeckabschnitt 28 auf. Befestigungsabschnitt 26 und Abdeckabschnitt 28 sind in Verlängerung voneinander angeordnet, so daß die Sichtblende 24 insgesamt eine langgestreckte Form hat.

In der Verkleidung 12 bzw. der Sichtschutzkappe 23 sind im vorliegenden Beispiel zwei Rastnoppen 30 oder thermisch verformte nietartige Vorsprünge ausgebildet, über die die Sichtblende 24 an der Verkleidung 12 befestigt ist.

Der Abdeckabschnitt 28 liegt in einer Ausgangsposition über dem Durchgangsloch 20 und verdeckt dieses (Fign. 1, 2). Am Abdeckabschnitt 28 ist ein Vorsprung 32 vorgesehen, der auf das Durchgangsloch 20 abgestimmt ist. Die Ränder des Vorsprungs 32 und des Durchgangslochs 20 sind abgeschrägt, wie dies besonders gut in Figur 3 zu sehen ist, so daß der Vorsprung 32 automatisch zentriert wird, wenn er in Eingriff mit dem Durchgangsloch 20 kommt. Wenn der Vorsprung 32 im Durchgangsloch 20 sitzt, so daß der Abdeckabschnitt 28 das Durchgangsloch 20 verdeckt, bilden die Außenseite der Verkleidung 12 und der Vorsprung 32 eine glatte Oberfläche.

Die Sichtblende 24 besteht aus einem elastischen Material, so daß zum einen der Abdeckabschnitt 28 gegen den Befestigungsabschnitt 26 bewegt werden kann und zum anderen bei einer Bewegung eine Rückstellkraft erzeugt wird, durch die der Abdeckabschnitt wieder in seine Ausgangsposition zurückbewegt wird. Die Sichtblende 24 ist so an der Verkleidung 12 angeordnet, daß der Abdeckabschnitt 28 gegen das Durchgangsloch 20 vorgespannt ist. Im gezeigten Beispiel wird dies dadurch begünstigt, daß sich das Durchgangsloch 20 in einer Ecke der Verkleidung 12 befindet, so daß die Sichtblende 24 in gebogener Form in der Verkleidung 12 angeordnet ist.

Die Sichtblende 24 ist ein gegenüber der Verkleidung 12 bzw. der Sichtschutzkappe 23 separates Bauteil und besteht im Regelfall auch aus einem anderen Material als diese Bauteile.

Der Abdeckabschnitt 28 kann, wie in Figur 3 gezeigt, durch das Werkzeug 22 zur Seite in eine andere Position geschoben werden, um an die Schraube 18 zu gelangen. Wird das Werkzeug 22 aus dem Durchgangsloch 20 zurückgezogen, so sorgt die Vorspannung des Abdeckabschnitts 28 in Richtung Durchgangsloch 20 dafür, daß der Abdeckabschnitt 28 wieder zurückklappt. Die konischen Ränder des Vorsprungs 32 und der Durchgangsloch 20 bewirken, daß der Vorsprung 32 sicher und vollständig wieder in das Durchgangsloch 20 eingreift und dieses verschließt.

Auch wenn die Erfindung hier im Zusammenhang mit einem Lenkrad beschrieben wurde, kann die Verkleidung 12 für ein beliebiges Bauteil, insbesondere im Fahrzeuginnenraum, stehen, in dem eine Öffnung reversibel verdeckt werden soll.

## Patentansprüche

1. Baugruppe, insbesondere Fahrzeuglenkradverkleidungsbaugruppe, bestehend aus einem Bauteil (12) mit einem Durchgangsloch (20) für ein Werkzeug (22) und einer Sichtblende (24) zur Abdeckung des Durchgangslochs (20), **dadurch gekennzeichnet, daß**
die Sichtblende (24) einen Befestigungsabschnitt (26) und
einen wenigstens teilweise elastischen Abdeckabschnitt (28) aufweist, der gegenüber dem Befestigungsabschnitt (26) so beweglich ist, daß er in einer Position das Durchgangsloch verdeckt und in einer anderen Position das Durchgangsloch (20) freigibt,
wobei der Befestigungsabschnitt (26) vom Durchgangsloch (20) beabstandet am Bauteil (12) befestigt ist und wobei die Sichtblende (24) bestrebt ist, sich selbsttätig in die Position zu bewegen, in der das Durchgangsloch (20) verdeckt ist.

2. Baugruppe nach Anspruch 1, **dadurch gekennzeichnet, daß** die Sichtblende (24) eine langgestreckte Form hat und der Befestigungsabschnitt (26) in Verlängerung des Abdeckabschnitts (28) angeordnet ist.

3. Baugruppe nach einem der vorhergehenden Ansprüche, **dadurch gekennzeichnet, daß** der Abdeckabschnitt (28) in Richtung der Position, in der das Durchgangsloch (20) verdeckt ist, vorgespannt ist.

4. Baugruppe nach einem der vorhergehenden Ansprüche, **dadurch gekennzeichnet, daß** die Sichtblende (24) vollständig aus einem elastischen Material besteht.

5. Baugruppe nach einem der vorhergehenden Ansprüche, **dadurch gekennzeichnet, daß** der Abdeckabschnitt (28) einen Vorsprung (32) aufweist, der formschlüssig in das Durchgangsloch (20) eingreifen kann.

6. Baugruppe nach Anspruch 5, **dadurch gekennzeichnet, daß** die Ränder des Vorsprungs (32) und des Durchgangslochs (20) eine konische Form aufweisen.

7. Baugruppe nach einem der vorhergehenden Ansprüche, **dadurch gekennzeichnet, daß** die Sichtblende (24) auf einer Innenseite des Bauteils (12) angeordnet ist.

8. Baugruppe nach einem der vorhergehenden Ansprüche, **dadurch gekennzeichnet, daß** der Befestigungsabschnitt (26) über eine Rastverbindung mit dem Bauteil (12) verbunden ist.

9. Baugruppe nach einem der vorhergehenden Ansprüche, **dadurch gekennzeichnet, daß** das Bauteil (12) eine rückseitige Lenkradverkleidung ist.

10. Baugruppe nach einem der vorhergehenden Ansprüche, **dadurch gekennzeichnet, daß** die Sichtblende (24) ein gegenüber dem Bauteil (12) separates Teil ist.

## Claims

1. An assembly, in particular a vehicle steering wheel covering assembly, consisting of a component (12) with a through bore (20) for a tool (22) and of a shield (24) to cover the through bore (20), **characterized in that**
the shield (24) has a fastening section (26) and
an at least partially elastic cover section (28), which is movable with respect to the fastening section (26) such that it covers the through bore in one position and exposes the through bore (20) in another position,
the fastening section (26) being fastened to the component (12) a distance away from the through bore (20), and the shield (24) tending to automatically move into the position in which the through bore (20) is covered.

2. The assembly according to claim 1, **characterized in that** the shield (24) has an elongated shape and the fastening section (26) is arranged in extension of the cover section (28).

3. The assembly according to either of the preceding claims, **characterized in that** the cover section (28) is prestressed towards the position in which the through bore (20) is covered.

4. The assembly according to any of the preceding claims, **characterized in that** the shield (24) consists entirely of an elastic material.

5. The assembly according to any of the preceding claims, **characterized in that** the cover section (28) has a projection (32) which can engage into the through bore (20) in a form-fitting manner.

6. The assembly according to claim 5, **characterized in that** the edges of the projection (32) and of the through bore (20) have a conical shape.

7. The assembly according to any of the preceding claims, **characterized in that** the shield (24) is arranged on an inner face of the component (12).

8. The assembly according to any of the preceding claims, **characterized in that** the fastening section (26) is connected with the component (12) by means of a snap-in connection.

9. The assembly according to any of the preceding claims, **characterized in that** the component (12) is a covering on the rear face of a steering wheel.

10. The assembly according to any of the preceding claims, **characterized in that** the shield (24) is a part that is separate from the component (12).

## Revendications

1. Ensemble, en particulier ensemble de garniture de volant de direction de véhicule, constitué par un composant (12) avec un trou traversant (20) pour un outil (22) et par un cache (24) pour recouvrir le trou traversant (20), **caractérisé en ce que**
le cache (24) présente un tronçon de fixation (26) et
un tronçon de recouvrement (28) au moins partiellement élastique qui est mobile par rapport au tronçon de fixation (26) de telle sorte que dans une position, il recouvre le trou de passage et dans une autre position, il dégage le trou de passage (20),
le tronçon de fixation (26) étant fixé au composant (12) à distance du trou de passage (20) et le cache tendant à se déplacer automatiquement jusque dans la position dans laquelle le trou de passage (20) est recouvert.

2. Ensemble selon la revendication 1, **caractérisé en ce que** le cache (24) a une forme allongée et le tronçon de fixation (26) est agencé dans le prolongement du tronçon de recouvrement (28).

3. Ensemble selon l'une des revendications précédentes, **caractérisé en ce que** le tronçon de recouvrement (28) est précontraint en direction de la position dans laquelle le trou de passage (20) est recouvert.

4. Ensemble selon l'une des revendications précédentes, **caractérisé en ce que** le cache (24) est constitué entièrement par un matériau élastique.

5. Ensemble selon l'une des revendications précédentes, **caractérisé en ce que** le tronçon de recouvrement (28) présente une saillie (32) qui peut s'engager par coopération de formes dans le trou de passage (20).

6. Ensemble selon la revendication 5, **caractérisé en ce que** les bords de la saillie (32) et du trou de passage (20) présentent une forme conique.

7. Ensemble selon l'une des revendications précédentes, **caractérisé en ce que** le cache (24) est agencé sur une face intérieure du composant (12).

8. Ensemble selon l'une des revendications précédentes, **caractérisé en ce que** le tronçon de fixation (26) est relié au composant (12) par une liaison par enclenchement.

9. Ensemble selon l'une des revendications précédentes, **caractérisé en ce que** le composant (12) est une garniture postérieure de volant de direction.

10. Ensemble selon l'une des revendications précédentes, **caractérisé en ce que** le cache (24) est une pièce séparée par rapport au composant (12).
